# FASCICULE DE BREVET EUROPEEN

(11) **EP 3 359 927 B1**
(45) Date de publication et mention de la délivrance du brevet: **08.12.2021**
(21) Numéro de dépôt: 16777678.0
(22) Date de dépôt: 05.10.2016
(51) Int. Cl.: G01J 1/42, G01J 1/02, G05D 1/02

(54) **DISPOSITIF MOBILE POUR LE CONTRÔLE ET/OU LA MAINTENANCE D'AU MOINS UN ÉQUIPEMENT D'UNE ZONE AÉROPORTUAIRE, SYSTÈME ET PROCÉDÉ CORRESPONDANTS**
MOBILE VORRICHTUNG ZUR STEUERUNG UND/ODER WARTUNG VON ZUMINDEST EINEM ANLAGENTEIL EINER FLUGHAFENZONE, SYSTEM UND DAZUGEHÖRIGES VERFAHREN
MOBILE DEVICE FOR THE CONTROL AND/OR MAINTENANCE OF AT LEAST ONE ITEM OF EQUIPMENT OF AN AIRPORT ZONE, SYSTEM AND METHOD CORRESPONDING THERETO

(30) Priorité: 05.10.2015 FR 1559481
(43) Date de publication de la demande: 15.08.2018
(73) Titulaire: FB Technology, 91000 Evry (FR); Sterela, 31860 Pins Justaret (FR)
(72) Inventeur: HENAUT, Julien, 31400 Toulouse (FR); BARBEY, Yoann, 44 700 Orvault (FR); LE CAM, Lionel, 91370 Verrières le Buisson (FR)
(74) Mandataire: Vidon Brevets & Stratégie
(86) Numéro de dépôt international: PCT/EP2016/073742
(87) Numéro de publication internationale: WO 2017/060272

(56) Documents cités:
- GB-A- 2 170 622

## Description

### 1. Domaine

L'invention concerne le contrôle et la maintenance des zones aéroportuaires et des équipements qui s'y trouvent.

### 2. Art antérieur

Les plates-formes aéroportuaires sont équipées de feux de balisage constituant des aides visuelles nécessaires au bon déroulement des phases d'atterrissage, de décollage et de roulage des avions. Ces feux de balisage permettent d'assurer la sécurité des personnes et des avions, y compris et surtout dans des conditions de mauvaise visibilité. Ils doivent correspondre à des normes fixées par l'annexe 14 de l'Organisation de l'Aviation Civile Internationale (OACI), qui imposent d'une part des performances techniques minimum, et d'autre part des conditions d'entretien de ces feux de balisage. L'OACI impose par exemple que les caractéristiques photométriques de ces feux de balisage soient régulièrement contrôlées, à raison de deux fois par an pour les feux encastrés et une fois par an pour les autres feux, la fréquence de contrôle pouvant cependant s'avérer plus importante pour certaines plates-formes aéroportuaires, compte tenu de leur trafic aérien ou des conditions environnementales (pollution, poussière, air salin etc.).

Dans une même optique, l'OACI impose la mise en conformité et le contrôle régulier des caractéristiques physiques des pistes aéroportuaires, la limitation et suppression d'obstacles sur ces pistes, et la mise en place de systèmes adéquats de gestion de la sécurité.

Les opérations de maintenance et de contrôle pouvant être réalisées dans cet objectif comprennent le contrôle photométrique des feux, leur nettoyage, la vérification de la fixation des feux au sol et leur remplacement éventuel, et le contrôle de la glissance du revêtement des pistes.

A ce jour, il est connu d'effectuer des contrôles de glissance et de photométrie par l'intermédiaire de systèmes de mesures embarqués sur un véhicule ou sur une remorque tractée. Ces systèmes présentent de nombreux inconvénients. En premier lieu, leur mise en œuvre nécessite le concours d'au moins deux opérateurs : un conducteur et une personne en charge de la gestion du logiciel de mesure. De plus, la précision des mesures dépend directement de la qualité de conduite et peut donc être sensiblement dégradée du fait de l'inexpérience ou de la fatigue du conducteur.

Les mesures de photométrie ne sont réalisées que de nuit. Elles sont longues et répétitives, les systèmes de mesure connus devant impérativement être déplacés en vis à vis de chacun des feux à contrôler.

Le nettoyage des feux est quant à lui réalisé au moyen d'un dispositif dédié installé dans un véhicule ou sur roulettes. Un véhicule conduit par un premier opérateur tracte un compresseur d'air pendant qu'un deuxième opérateur se déplace de feu en feu pour assurer la fonction de nettoyage. Ce sont des opérations répétitives, harassantes, qui sont faites quelles que soient les conditions atmosphériques. L'opérateur en charge du nettoyage est particulièrement exposé aux aléas climatiques, aux projections éventuelles de produit nettoyant et au bruit du compresseur.

En ce qui concerne la vérification de la fixation des feux au sol et leur remplacement éventuel, la technique actuellement mise en œuvre est strictement manuelle. Les équipes de maintenance interviennent ainsi sur des feux de balisage au cas par cas, au gré d'interventions connexes ou sur la base de rapports de mesures photométriques. Après avoir contrôlé les couples de serrage des fixations, les techniciens contrôlent de manière strictement visuelle la présence éventuelle sur la piste d'objets étrangers. La plupart des interventions se faisant de nuit, ces vérifications sont aléatoires et sujettes à caution. De plus, de mauvaises conditions climatiques rendent ces actions contraignantes. Elles sont ainsi généralement annulées ou reportées par temps très froid ou très pluvieux.

Le document GB2170622 décrit par ailleurs un système automatisé de nettoyage de feux de balisage d'une zone aéroportuaire.

Il existe donc un besoin d'amélioration des techniques connues de contrôle et de maintenance des zones aéroportuaires et de leurs équipements, notamment en termes de fiabilité, de précision, d'autonomie et de rapidité d'exécution.

### 3. Résumé de l'invention

La technique proposée répond à ce besoin en proposant, dans au moins un mode de réalisation, un dispositif mobile pour le contrôle et/ou la maintenance d'au moins un équipement d'une zone aéroportuaire tel que défini dans la revendication 1.

Dans la présente description, l'expression « source de lumière » désigne tant les sources de lumières primaires que les sources de lumière secondaires. Ainsi, une source de lumière primaire désigne une source d'énergie rayonnante qui émet elle-même l'énergie rayonnée, par exemple un feu ou un panneau de balisage aéroportuaire. Une source de lumière secondaire désigne une surface ou un objet qui n'émet pas de lumière par lui-même mais qui renvoie en partie la lumière reçue d'une source primaire, par exemple, une balise réfléchissante. La localisation du dispositif ou de la source de lumière peut être exprimée en coordonnées cartésiennes, ou polaires, ou selon toute autre base connue de coordonnées.

L'invention repose ainsi sur le concept consistant à fournir un dispositif mobile motorisé sans équipage, apte à se diriger sur les pistes aéroportuaires en fonction de la position des sources de lumière qui s'y trouvent. L'utilisation d'une ou de plusieurs sources de lumière comme point(s) de référence lors des déplacements d'un dispositif automatisé est particulièrement adaptée à l'environnement aéroportuaire, les feux et panneaux de balisage étant positionnés en nombre sur et aux abords des pistes et autres voies de circulation.

Un tel dispositif présente de nombreux avantages techniques. En premier lieu, du fait de l'automatisation des tâches de détermination de la trajectoire et de déplacement vers l'équipement à contrôler et/ou entretenir, un tel dispositif présente une grande autonomie d'utilisation. Un opérateur peut donc superviser seul le bon déroulement des opérations, sans devoir nécessairement accompagner le dispositif dans ses déplacements. L'automatisation des tâches permet également de gagner en rapidité d'exécution et en précision, tout en réduisant les risques d'erreurs.

La mise en œuvre d'un bras articulé permet de plus au dispositif mobile d'entrer en contact avec un équipement à contrôler/entretenir ou d'adopter différentes positions vis-à-vis de ce dernier sans avoir à se déplacer.

Selon un mode de réalisation particulier, ledit bras articulé est couplé à une table croisée adaptée pour positionner ledit bras selon un plan défini.

Lorsqu'une telle table croisée est orientée selon un plan horizontal, il est ainsi possible d'amener le bras articulé en surplomb d'un équipement à cibler afin de faciliter l'exécution des opérations subséquentes de maintenance et/ou de contrôle.

Selon un mode de réalisation particulier, ledit au moins un équipement appartient au groupe comprenant une source de lumière et une piste aéroportuaire.

Selon un mode de réalisation particulier, la source de lumière est un feu aéroportuaire ou un panneau de balisage aéroportuaire.

Selon un mode de réalisation particulier, le dispositif comprend un module de communication adapté pour communiquer avec au moins une unité de commande localisée à distance.

Il est ainsi possible pour un opérateur de commander le dispositif à distance, préférentiellement depuis une zone protégée des intempéries et dans laquelle cet opérateur peut avoir accès à des informations utiles à la prise de décisions (e.g. état du trafic, incidents éventuels, positionnement d'autres acteurs participant aux opérations). Le dispositif peut avantageusement transmettre l'information collectée en temps réel, pendant le déroulé des opérations.

Selon un mode de réalisation particulier, le dispositif comprend un module de détection d'au moins un objet comprenant au moins un capteur photosensible et/ou un laser à balayage, et une unité de traitement de données collectées par ledit capteur et/ou ledit laser.

Le terme « capteur photosensible » tel qu'utilisé dans la présente description désigne tout capteur capable de capter des ondes électromagnétiques, tant dans le domaine du visible que dans le domaine de l'infrarouge.

Cette caractéristique permet d'améliorer la sécurité sur les pistes, le dispositif ayant l'aptitude de signaler à un opérateur la présence de débris et/ou d'obstacles à contourner ou prélever.

Selon un mode de réalisation particulier, ledit module de navigation (14) comprend une unité de détermination de ladite au moins une trajectoire en fonction de la localisation dudit objet détecté.

Le dispositif a ainsi la capacité d'adapter sa trajectoire et d'établir des manœuvres de contournement, en fonction des objets étrangers détectés.

Selon un mode de réalisation particulier, ledit module de détection d'au moins un objet comprend des moyens d'identification d'au moins un feu aéroportuaire et/ou un panneau de balisage parmi ledit au moins un objet détecté à partir d'au moins une information caractéristique dudit feu aéroportuaire et/ou dudit panneau de balisage.

Le dispositif est ainsi capable de détecter de manière autonome la position d'un feu aéroportuaire ou d'une ligne de feux. Une telle identification est utile tant dans la détermination de la trajectoire à suivre que pour la mise en œuvre de certaines opérations de contrôle ou de maintenance nécessitant un positionnement précis du dispositif vis-à-vis du feu et éventuellement une manipulation de ce dernier.

Selon un mode de réalisation particulier, ledit module de détection d'au moins un objet comprend des moyens d'identification d'au moins une source de lumière secondaire particulière parmi ledit au moins un objet détecté à partir d'au moins une information caractéristique de ladite source de lumière secondaire.

Selon un mode de réalisation particulier, ledit au moins un module de contrôle et/ou de maintenance est un module de contrôle photométrique d'un faisceau émis par ladite au moins une source de lumière, ledit module comprenant au moins un capteur photométrique adapté pour la collecte de données de luminosité depuis ledit faisceau et une unité de traitement adaptée pour l'obtention de caractéristiques photométriques dudit faisceau à partir desdites données collectées.

Selon un mode de réalisation particulier, ledit module de contrôle photométrique forme module de détection dudit au moins un objet.

Le module de contrôle photométrique remplit donc une double fonction, ce qui permet d'améliorer la compacité de l'ensemble tout en facilitant la mise en œuvre de certaines prises de mesure photométrique, tel que détaillé dans la suite de la description.

Selon un mode de réalisation particulier, ledit au moins un capteur photosensible est monté sur ledit bras articulé adapté pour élever et/ou abaisser et/ou faire pivoter ledit capteur.

Par élévation du capteur photosensible, il est ainsi possible de contrôler les caractéristiques photométriques de feux élevés, e.g. de feux d'approches montés sur poteau à une hauteur supérieure à 1 mètre. De manière alternative ou en combinaison, lorsqu'un ou plusieurs capteurs photosensibles est localisé au sein d'un barreau de mesure, un tel bras permet de déplacer pendant le roulage du robot ce barreau entre une position horizontale basse, particulièrement avantageuse pour le contrôle de feux encastrés dans une piste aéroportuaire, une position horizontale haute, particulièrement avantageuse pour le contrôle de feux élevés de bord de piste où des feux encastrés et élevés peuvent être installés ou encore une position verticale, adaptée pour le contrôle de feux élevés ou encastrés positionnés sur une ligne parallèle au déplacement du barreau de mesures.

Selon l'invention, ledit au moins un bras articulé comprend au moins un capteur de couple.

Le dispositif peut ainsi contrôler le serrage des vis de fixation au sol de la source de lumière.

Selon l'invention, ledit bras articulé comprend en outre un sous-module de vissage/dévissage et en ce que ledit dispositif comprend un bras de préhension dudit équipement.

Le dispositif peut ainsi procéder au remplacement d'une source de lumière défectueuse.

Selon un mode de réalisation particulier, ledit bras articulé comprend un sous-module de nettoyage dudit équipement.

Selon un mode de réalisation particulier, ledit au moins un module de contrôle et/ou de maintenance est un module de contrôle de la glissance d'une piste aéroportuaire comprenant au moins un capteur de glissance.

L'invention concerne également un système de contrôle et/ou la maintenance d'au moins un équipement d'une zone aéroportuaire selon la revendication 13.

Un tel système permet ainsi de contrôler une pluralité de dispositifs automatisés de contrôle/maintenance, avec une gestion centralisée et en temps réel de l'information. Ce système rend également possible l'enregistrement et la traçabilité des opérations et relevés. Enfin, un opérateur peut reprendre le contrôle manuel du dispositif à tout moment, si nécessaire. Bien entendu, l'ensemble des améliorations techniques pouvant s'appliquer au dispositif mobile décrit ci-dessus peuvent également s'appliquer *mutatis mutandis* à un système de contrôle/maintenance mettant en œuvre un tel dispositif.

L'invention concerne également un procédé de contrôle et/ou de maintenance d'au moins un équipement d'une zone aéroportuaire selon la revendication 14.

### 4. Figures

D'autres caractéristiques et avantages apparaîtront à la lecture de la description suivante d'un mode de réalisation particulier de l'invention, donné à titre de simple exemple illustratif et non limitatif, et des dessins annexés, parmi lesquels :
- la figure 1 est un schéma illustrant un dispositif mobile pour le contrôle et/ou la maintenance d'au moins un équipement d'une zone aéroportuaire, selon un mode de réalisation particulier de l'invention;
- la figure 2 est un schéma illustrant un système de contrôle et/ou de maintenance d'au moins un équipement d'une zone aéroportuaire, selon un mode de réalisation particulier de la divulgation ;
- la figure 3 est un diagramme illustrant les étapes successives mises en œuvre lors de la conduite d'une opération de contrôle photométrique d'un feu aéroportuaire, selon un mode de réalisation particulier de la divulgation.

Les différents éléments illustrés par les figures ne sont pas nécessairement représentés à l'échelle réelle, l'accent étant davantage porté sur la représentation du fonctionnement général de la divulgation.

### 5. Description détaillée d'un mode de réalisation particulier de l'invention

Le principe général de l'invention repose sur l'utilisation, pour le contrôle et la maintenance des équipements d'une zone aéroportuaire, d'un dispositif mobile motorisé sans équipage, apte à se diriger sur les pistes aéroportuaires en fonction de la position des sources de lumière, primaires ou secondaires, qui s'y trouvent. Un tel dispositif peut ainsi servir à des tâches aussi diverses que l'entretien des feux ou que la mesure de la glissance sur les pistes, mais dans les deux cas, il présente les caractéristiques nouvelles et inventives de la revendication 1.

La mise en œuvre d'un bras articulé permet ainsi au dispositif mobile d'entrer en contact avec un équipement à contrôler/entretenir ou adopter différentes positions vis-à-vis de ce dernier sans avoir à se déplacer.

Selon un mode de réalisation préférentiel non représenté, le bras articulé est couplé à une table croisée adaptée pour positionner ce dernier selon un plan défini. Lorsqu'une telle table croisée est orientée selon un plan horizontal, il est ainsi possible d'amener le bras articulé en surplomb d'un équipement à cibler afin de faciliter l'exécution des opérations subséquentes de maintenance et/ou de contrôle.

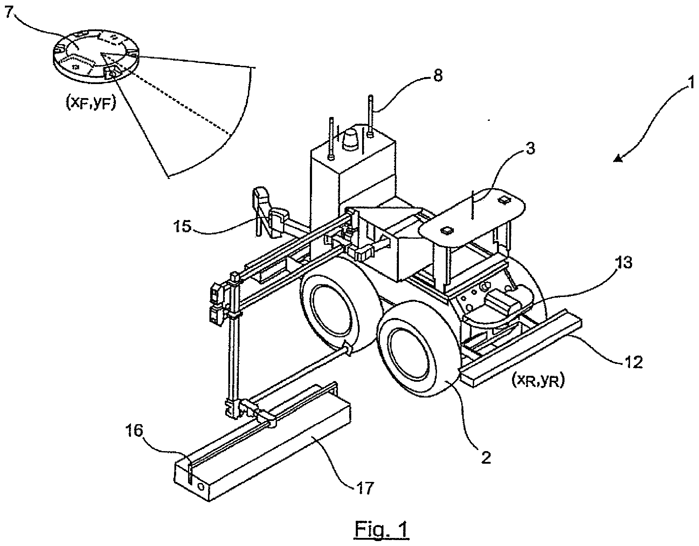

La Fig. 1 illustre un dispositif mécatronique 1, également appelé robot dans la suite de la description, motorisé et monté sur roues 2. Selon un mode de réalisation alternatif, le robot 1 peut également être monté sur chenilles ou sur tout autre équipement de locomotion lui permettant de se déplacer rapidement sur les aires aéroportuaires et de sortir ou entrer dans un véhicule tiers.

Le robot 1 est équipé d'une ou plusieurs antennes 3 et d'un ou plusieurs récepteurs GNSS (*Global Navigation Satellite System* en langue anglaise), pour le placement à proximité du lieu d'intervention, et d'un ou plusieurs capteurs complémentaires, pour le positionnement fin.

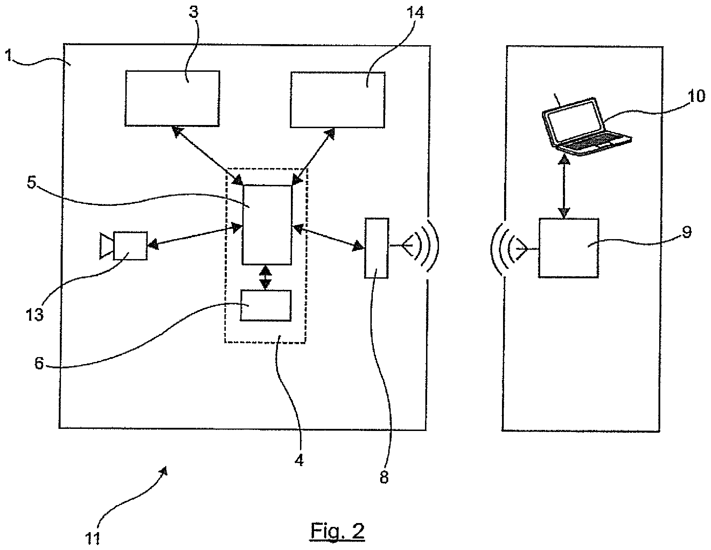

Tel qu'illustré par la Fig. 2, le robot 1 intègre également un ordinateur de bord 4, comprenant une unité de calcul, par exemple un microprocesseur 5, et une mémoire 6 constituée d'un disque dur et/ou d'une RAM. Cette mémoire est notamment adaptée pour stocker les coordonnées spatiales (x_{F},y_{F}) d'une ou de plusieurs sources de lumière 7 amenées à servir de point de référence dans les déplacements du robot 1 sur la piste. Ces sources de lumière 7 peuvent prendre la forme d'un feu d'approche aéroportuaire à contrôler, d'une ligne de feux à longer ou d'un ou plusieurs panneaux de balisage.

De manière préférentielle, ces coordonnés (x_{F},y_{F}) peuvent être chargées dans la mémoire 6 du robot 1 via un port de donnée (par exemple, de type USB) ou par transfert radio, via un émetteur/récepteur radio 8, depuis un poste de commande localisé à distance 9. Ce poste de commande 9 permet également le pilotage et la supervision à distance du robot 1 par un opérateur, via une interface utilisateur 10. Ce poste de commande 9 peut se présenter sous la forme d'un téléphone portable ou tout moyen informatique connecté directement au robot ou en réseau. L'association du robot 1 d'une part et du poste de commande 9 d'autre part forme un système 11 de contrôle et/ou de maintenance d'équipements de zone aéroportuaire.

De manière avantageuse, un système FOD (*Foreign Objects Detection* en langue anglaise) 12 est embarqué dans le robot 1 afin de permettre la détection éventuelle d'obstacles et de débris sur la piste. Ce système 11 est constitué d'une caméra 13, d'un laser à balayage, et d'une unité de traitement permettant la détection d'objets.

Sur détection du système FOD, la localisation des objets étrangers présents sur les aires de manœuvre (pistes, voies de circulation) est stockée dans la mémoire 6 et transmise en temps réel au poste de commande à distance 9.

Actuellement, la détection de FOD est réalisée par des personnels de l'aéroport qui remontent les pistes à grande vitesse entre les mouvements d'aéronefs. Le robot 1 décrit ci-dessus permet une plus grande acuité et précision dans la détection et la localisation des objets.

Une autre technologie existante met en jeu des détecteurs installés à intervalles réguliers le long des pistes et inspectant l'état de la piste en temps réel. Le dispositif décrit permet de s'affranchir de cette contrainte d'installation.

De manière avantageuse, des informations caractéristiques des différents feux et balises aéroportuaires sont stockées dans la mémoire 6. Par consultation de ces informations, l'ordinateur de bord 4 peut alors identifier au sein des objets détectés par le système FOD 12 des feux 7, lignes de feux, ou panneaux de balisage, à contrôler ou prendre pour référence lors de la détermination de la trajectoire à suivre par le robot 1.

De manière avantageuse, l'ordinateur de bord 4 peut également identifier à quel type les feux détectés appartiennent et en déduire les caractéristiques techniques associées. Une telle identification peut se révéler particulièrement avantageuse pour la conduite ultérieure d'opérations de contrôle de couples de serrage, de changement de feu, de contrôle photométrique ou de nettoyage, tel que décrit dans la suite de la description. En effet, les performances et conditions d'entretien des feux 7 sont définies différemment selon la fonction du feu de balisage sur le site aéroportuaire.

De manière avantageuse, le robot 1 est équipé d'une plateforme inertielle, de gyroscopes, et d'une pluralité de capteurs odométriques.

Le robot 1 comprend également un module de navigation 14 adapté pour déterminer au moins une trajectoire, en fonction de sa localisation courante (x_{R},y_{R}) et de la localisation (x_{F},y_{F}) de la source lumineuse 7 prise pour référence. Selon un mode de réalisation alternatif, la localisation du dispositif ou de la source de lumière peuvent également être exprimées en coordonnées polaires, ou selon toute base connue de coordonnées. De manière avantageuse, le module de navigation 14 prend en compte les données collectées par le système FOD 12 afin de pouvoir contourner les obstacles ayant été préalablement détectés sur la piste.

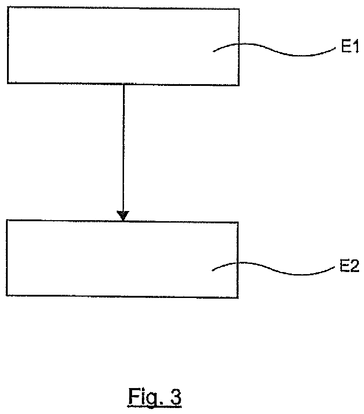

Tel qu'illustré par la Fig.3, le procédé de contrôle et/ou de maintenance peut alors être résumé à la succession des étapes suivantes :
- une étape (E1) de déplacement du robot 1 selon une trajectoire déterminée par le module de navigation 14, en fonction de la localisation courante (x_{R},y_{R}) du robot 1 et des coordonnées (x_{F},y_{F}) du ou des feux de référence,
- une étape (E2) de mise en œuvre d'un ou plusieurs modules de contrôle et/ou de maintenance d'un équipement aéroportuaire.

L'expression « équipement aéroportuaire » désigne tant les pistes et voies de circulation que les différentes sources lumineuses 7 utilisées pour le balisage de ces dernières. Ce ou ces modules de contrôle et/ou de maintenance peuvent se présenter sous plusieurs formes.

Ainsi, selon l'invention, un premier bras poly-articulé 15 est équipé d'un capteur de couple de serrage. Ainsi, une fois le robot 1 positionné à proximité du feu 7 à contrôler, ce dernier identifie le type de feu dont il s'agit, son orientation, et la disposition des vis de fixation.

Le système de vision (caméra 13 et/ou système FOD 12) ou de détection (laser à balayage) du robot 1 assure par la suite le positionnement précis du bras poly-articulé 15 et du capteur de couple de serrage sur une vis à contrôler.

Selon l'invention, le bras poly-articulé 15 comprend également un sous-module de vissage/dévissage et un bras articulé additionnel de préhension du feu 7.

Le système de vision du robot 1 assure alors le positionnement précis du sous-module de vissage/dévissage sur une vis. Ce dernier procède alors au dévissage de la vis et à son stockage dans un emplacement dédié. Une fois les vis extraites et stockées, le bras articulé démonte le feu 7 à changer selon une cinématique propre au type de feu identifié. Le bras de préhension déconnecte alors la prise d'alimentation du feu 7, avant de saisir ce dernier et de le poser sur un premier plateau. Le bras de préhension saisit ensuite un feu de rechange sur un deuxième plateau et le connecte électriquement. Il positionne alors le nouveau feu selon une cinématique qui lui est propre. Enfin, le robot 1 revisse l'ensemble des vis de fixation du nouveau feu, en respectant les couples de serrage du constructeur.

Selon un mode de réalisation avantageux, le robot 1 comprend un bras poly-articulé oscillant et se translatant sur un axe et équipé d'un sous-module de nettoyage par cryogénie. Selon des modes de réalisations alternatifs, le nettoyage peut également être réalisé par pulvérisation de bicarbonate de soude et/ou de poudre de noyaux. Le sous-module de nettoyage est constitué d'une buse de projection du média de nettoyage. Le sous-module embarque de plus une unité de projection (pompe, vis sans fin) alimentée par un réservoir de stockage du produit nettoyant et mise sous pression à l'aide d'un compresseur tracté, selon les caractéristiques de pression et de débit en accord avec les besoins du nettoyage à effectuer. Pour la réalisation des opérations de nettoyage, le bras articulé assure une cinématique propre à chaque type de feu pour garantir le nettoyage de l'intégralité du ou des feux.

De manière avantageuse, le robot 1 comprend également un module de contrôle photométrique 16 équipé d'une pluralité de capteurs photométriques 17. Un tel module de contrôle peut se présenter sous différentes formes, selon qu'il soit mis en œuvre à l'arrêt du robot 1 ou au cours du déplacement de ce dernier le long d'une trajectoire donnée.

Dans le cadre d'une mesure photométrique réalisée à l'arrêt du robot 1, un système de mesure photométrique connu est agencé à l'extrémité d'un bras articulé télescopique adapté pour surélever ou abaisser le système de mesure. Pour la réalisation de la mesure photométrique, le robot 1, après avoir préférentiellement identifié le type du feu 7 à contrôler, se positionne en vis-à-vis du feu 7 ou du poteau au sommet duquel le feu 7 est fixé. Le bras télescopique est alors déployé afin d'amener le système de mesure photométrique en vis-à-vis du feu 7 à contrôler. La mesure est par la suite effectuée selon un mode opératoire connu. Selon un mode de réalisation alternatif, le procédé de mesure photométrique ne comprend pas d'étape d'identification du feu 7 à contrôler.

Le contrôle photométrique des feux 7 au cours du déplacement du robot 1 impose quant à lui un positionnement transversal très précis du système de mesure photométrique, et notamment de ses capteurs photométriques 17, avantageusement agencés au sein d'un barreau de mesure, pour garantir la qualité métrologique du contrôle requis par la réglementation aéronautique. De manière avantageuse, ce module de contrôle photométrique 16 comprend également un capteur de vision et un système de traitement d'image permettant de détecter et identifier la ligne de feux 7 à contrôler.

Le module de localisation 3 permet de définir un couloir de navigation à suivre pour assurer la fonction de contrôle. Le positionnement fin du robot 1, pendant la phase de contrôle sur piste, est assuré par un asservissement visuel sur la ligne de feux identifiée, dans ce couloir de navigation.

De manière avantageuse, et tel qu'illustré par la Figure 1, le barreau comprenant les capteurs photométriques 17 est monté à l'extrémité d'un bras articulé mobile selon un plan perpendiculaire à la direction d'avancement du robot 1. Un tel bras permet ainsi de déplacer pendant le roulage du robot ce barreau entre une position horizontale basse, particulièrement avantageuse pour le contrôle de feux encastrés dans une piste aéroportuaire, une position horizontale haute, particulièrement avantageuse pour le contrôle de feux élevés de bord de piste où des feux encastrés et élevés peuvent être installés ou encore une position verticale, adaptée pour le contrôle de feux élevés ou encastrés positionnés sur une ligne parallèle au déplacement du barreau de mesures.

Selon un mode opératoire analogue, un robot 1 équipé d'un capteur de glissance peut dresser la cartographie du coefficient de frottement le long d'un couloir défini.

Il convient de souligner que les différents modes de réalisation mentionnés ci-dessus peuvent être mis en œuvre strictement indépendamment les uns des autres. Ainsi, un dispositif selon l'invention peut comprendre un ou plusieurs des modules de contrôle/maintenance optionnels mentionnés ci-dessus, par exemple un module de contrôle de la glissance et un module de nettoyage des feux, sans pour autant en comprendre d'autres, comme par exemple un module de mesure photométrique. Quelle que soit la configuration adoptée, un dispositif selon l'invention présentera cependant l'avantage d'assurer de manière autonome, précise, fiable, et rapide, le contrôle et la maintenance des zones aéroportuaires et de leurs équipements.

## Revendications

1. Dispositif (1) mobile pour le contrôle et/ou la maintenance d'au moins un équipement d'une zone aéroportuaire, ledit dispositif étant motorisé sans équipage, et adapté pour se déplacer sur une piste aéroportuaire, ledit dispositif comprenant :
• un module de contrôle de la localisation (3) dudit dispositif (1), un module de navigation (14) adapté pour la détermination d'au moins une trajectoire dudit dispositif (1) vers ou sur ledit au moins un équipement définie en fonction de la localisation (x_{R},y_{R}) dudit dispositif (1) et de la localisation (x_{F},y_{F}) d'au moins une source de lumière (7),
• au moins un module de contrôle et/ou de maintenance dudit au moins un équipement, comprenant au moins un bras articulé (15),
ledit dispositif étant **caractérisé en ce que** ledit au moins un bras articulé (15) comprend au moins un capteur de couple et un sous-module de vissage/dévissage,
et **en ce qu'**il comprend en outre un bras de préhension dudit équipement.

2. Dispositif selon la revendication 1, **caractérisé en ce que** ledit au moins un équipement appartient au groupe comprenant une source de lumière et une piste aéroportuaire.

3. Dispositif (1) selon l'une des revendications 1 et 2, **caractérisé en ce que** ladite source de lumière (7) est un feu aéroportuaire ou un panneau de balisage aéroportuaire.

4. Dispositif (1) selon l'une des revendications 1 à 3, **caractérisé en ce qu'**il comprend un module de communication (8) adapté pour communiquer avec au moins une unité de commande localisée à distance (9).

5. Dispositif (1) selon l'une des revendications 1 à 4, **caractérisé en ce qu'**il comprend un module de détection (12) d'au moins un objet comprenant au moins un capteur photosensible et/ou un laser à balayage, et une unité de traitement de données collectées par ledit capteur et/ou ledit laser.

6. Dispositif (1) selon la revendication 5, **caractérisé en ce que** ledit module de navigation (14) comprend une unité de détermination de ladite au moins une trajectoire en fonction de la localisation dudit objet détecté.

7. Dispositif (1) selon l'une des revendications 5 et 6, **caractérisé en ce que** ledit module de détection (12) d'au moins un objet comprend des moyens d'identification d'au moins un feu aéroportuaire et/ou un panneau de balisage (7) parmi ledit au moins un objet détecté à partir d'au moins une information caractéristique dudit feu aéroportuaire (7) et/ou dudit panneau de balisage.

8. Dispositif (1) selon l'une des revendications 1 à 7, **caractérisé en ce que** ledit au moins un module de contrôle et/ou de maintenance est un module de contrôle photométrique (16) d'un faisceau émis par ladite au moins une source de lumière (7), ledit module comprenant au moins un capteur photométrique (17) adapté pour la collecte de données de luminosité depuis ledit faisceau et une unité de traitement adaptée pour l'obtention de caractéristiques photométriques dudit faisceau à partir desdites données collectées.

9. Dispositif (1) selon la revendications 8, **caractérisé en ce que** ledit module de contrôle photométrique (16) forme module de détection (12) dudit au moins un objet.

10. Dispositif (1) selon l'une des revendications 1 à 9, **caractérisé en ce que** ledit au moins un capteur photosensible est monté sur ledit bras télescopique et **en ce que** ledit bras (15) est adapté pour élever et/ou abaisser et/ou faire pivoter ledit capteur.

11. Dispositif (1) selon l'une des revendications 1 à 10, **caractérisé en ce que** ledit bras articulé (15) comprend un sous-module de nettoyage dudit équipement.

12. Dispositif (1) selon l'une des revendications 1 à 11, **caractérisé en ce que** ledit au moins un module de contrôle et/ou de maintenance est un module de contrôle de la glissance d'une piste aéroportuaire comprenant au moins un capteur de glissance.

13. Système (11) de contrôle et/ou de le- maintenance d'au moins un équipement d'une zone aéroportuaire, ledit système (11) comprenant :
• au moins un dispositif (1) selon l'une des revendications 1 à 12,
• au moins un module de commande à distance (9) dudit dispositif (1).

14. Procédé de contrôle et/ou de maintenance d'au moins un équipement d'une zone aéroportuaire, mettant en œuvre un dispositif (1) selon l'une des revendications 1 à 12, motorisé sans équipage, adapté pour se déplacer sur une piste aéroportuaire, et comprenant un module de contrôle de sa localisation courante (x_{R},y_{R}), au moins une mémoire (6), et un module de navigation (14), ledit procédé comprenant au moins :
• une étape de déplacement (E1) dudit dispositif (1) selon une trajectoire déterminée par ledit module de navigation (14), dudit dispositif (1) vers ou sur ledit au moins un équipement, définie en fonction de la localisation (x_{R},y_{R}) dudit dispositif (1) et de la localisation (x_{F},y_{F}) d'au moins une source de lumière (7),
• une étape de mise en œuvre d'un module (E2) de contrôle et/ou de maintenance dudit au moins un équipement.

## Patentansprüche

1. Mobile Vorrichtung (1) zur Steuerung und/oder zur Wartung mindestens einer Ausrüstung einer Flughafenzone, wobei die genannte Vorrichtung unbemannt motorisiert ist, und dazu angepasst ist, sich auf einer Flughafenpiste zu bewegen, wobei die genannte Vorrichtung umfasst:
• ein Modul (3) zur Steuerung der Lokalisation der genannten Vorrichtung (1), ein Modul (14) zur Navigation, das zur Bestimmung mindestens einer Bahn der genannten Vorrichtung (1) zu oder auf der genannten mindestens einen Ausrüstung angepasst ist, die als Funktion der Lokalisation (x_{R}, y_{R}) der genannten Vorrichtung (1) und der Lokalisation (x_{F}, y_{F}) mindestens einer Lichtquelle (7) definiert ist,
• mindestens ein Modul zur Steuerung und/oder zur Wartung der genannten mindestens einen Ausrüstung, umfassend mindestens einen Gelenkarm (15),
wobei die genannte Vorrichtung **dadurch gekennzeichnet ist, dass** der mindestens eine Gelenkarm (15) mindestens einen Drehmomentsensor und ein Teilmodul zum Einschrauben/Abschrauben umfasst, und dadurch, dass er außerdem einen Greiferarm der genannten Ausrüstung umfasst.

2. Vorrichtung nach Anspruch 1, **dadurch gekennzeichnet, dass** die genannte mindestens eine Ausrüstung zur Gruppe, umfassend eine Lichtquelle und eine Flughafenpiste, gehört.

3. Vorrichtung (1) nach einem der Ansprüche 1 und 2, **dadurch gekennzeichnet, dass** die genannte Lichtquelle (7) ein Flughafenfeuer oder eine Flughafenbefeuerungseinrichtung ist.

4. Vorrichtung (1) nach einem der Ansprüche 1 bis 3, **dadurch gekennzeichnet, dass** sie ein Kommunikationsmodul (8) umfasst, das dazu angepasst ist, mit mindestens einer Steuereinheit (9) zu kommunizieren, die beabstandet angeordnet ist.

5. Vorrichtung (1) nach einem der Ansprüche 1 bis 4, **dadurch gekennzeichnet, dass** sie ein Modul (12) zur Detektion mindestens eines Objekts umfassend mindestens einen lichtempfindlichen Sensor und/oder einen Abtastlaser, und eine Einheit zur Datenverarbeitung aufweist, die von dem genannten Sensor und/oder dem genannten Laser gesammelt werden.

6. Vorrichtung (1) nach Anspruch 5, **dadurch gekennzeichnet, dass** das genannte Navigationsmodul (14) eine Einheit zur Bestimmung der genannten mindestens einen Bahn als Funktion der Lokalisation des genannten detektierten Objekts umfasst.

7. Vorrichtung (1) nach einem der Ansprüche 5 oder 6, **dadurch gekennzeichnet, dass** das genannte Detektionsmodul (12) mindestens eines Objekts Mittel zur Identifikation mindestens eines Flughafenfeuers und/oder einer Flughafenbefeuerungseinrichtung (7) unter dem genannten mindestens einen Objekt umfasst, das ausgehend von mindestens einer charakteristischen Information des genannten Flughafenfeuers (7) und/oder der genannten Flughafenbefeuerungseinrichtung detektiert wird.

8. Vorrichtung (1) nach einem der Ansprüche 1 bis 7, **dadurch gekennzeichnet, dass** das genannte mindestens eine Modul zur Steuerung und/oder zur Wartung ein Modul (16) zur photometrischen Steuerung eines Strahls ist, der von der genannten mindestens einen Lichtquelle (7) emittiert wird, wobei das genannte Modul mindestens einen photometrischen Sensor (17), der zur Sammlung von Leuchtstärkedaten aus dem genannten Strahl angepasst ist, und eine Behandlungseinheit aufweist, die zum Erhalten photometrischer Charakteristiken des genannten Strahls aus den genannten gesammelten Daten angepasst ist.

9. Vorrichtung (1) nach Anspruch 8, **dadurch gekennzeichnet, dass** das genannte photometrische Steuermodul (16) ein Detektionsmodul (12) des genannten mindestens einen Objekts bildet.

10. Vorrichtung (1) nach einem der Ansprüche 1 bis 9, **dadurch gekennzeichnet, dass** der mindestens eine lichtempfindliche Sensor an dem genannten Teleskoparm montiert ist, und dadurch, dass der genannte Arm (15) dazu angepasst ist, den genannten Sensor anzuheben und/oder abzusenken und/oder zu verschwenken.

11. Vorrichtung (1) nach einem der Ansprüche 1 bis 10, **dadurch gekennzeichnet, dass** der genannte Gelenkarm (15) ein Teilmodul zur Reinigung der genannten Ausrüstung umfasst.

12. Vorrichtung (1) nach einem der Ansprüche 1 bis 11, **dadurch gekennzeichnet, dass** das mindestens eine Modul zur Steuerung und/oder zur Wartung ein Modul zur Steuerung der Glätte einer Flughafenpiste ist, das mindestens einen Glättesensor umfasst.

13. System (11) zur Steuerung und/oder zur Wartung mindestens einer Ausrüstung einer Flughafenzone, wobei das genannte System (11) umfasst:
• mindestens eine Vorrichtung (1) nach einem der Ansprüche 1 bis 12,
• mindestens ein Modul (9) zur Fernsteuerung der genannten Vorrichtung (1).

14. Verfahren zur Steuerung und/oder zur Wartung mindestens einer Ausrüstung einer Flughafenzone, unter Verwendung einer Vorrichtung (1) nach einem der Ansprüche 1 bis 12, die unbemannt motorisiert ist, die dazu angepasst ist, sich auf einer Flughafenpiste zu bewegen, und die ein Modul zur Steuerung ihrer aktuellen Lokalisation (x_{R}, y_{R}), mindestens einen Speicher (6) und ein Navigationsmodul (14) umfasst, wobei das genannte Verfahren mindestens umfasst:
• einen Schritt (E1) des Bewegens der genannten Vorrichtung (1) gemäß einer durch das genannte Navigationsmodul (14) bestimmten Bahn der genannten Vorrichtung (1) zu oder auf der genannten mindestens einen Ausrüstung, die als Funktion der Lokalisation (x_{R}, y_{R}) der genannten Vorrichtung (1) und der Lokalisation (x_{F}, y_{F}) mindestens einer Lichtquelle (7) definiert wird,
• einen Schritt (E2) des Verwendens eines Moduls zur Steuerung und/oder zur Wartung der genannten mindestens einen Ausrüstung.

## Claims

1. Mobile device (1) for the monitoring and/or maintenance of at least one equipment item in an airport zone, the said device being motorised without a crew and being adapted to move on an airport runway, the said device comprising:
• a module (3) for monitoring the location of the said device (1),
• a navigation module (14) adapted to determine at least one trajectory of the said device (1), towards or on the said at least one equipment item, which is defined as a function of the location (x_{R},y_{R}) of the said device (1) and the location (x_{F},y_{F}) of at least one light source (7),
• at least one module for monitoring and/or maintenance of the said at least one equipment item, comprising at least one articulated arm (15),
the said device being **characterised in that** the said at least one articulated arm (15) comprises at least one torque sensor and a screwing/unscrewing submodule,
and **in that** it furthermore comprises an arm for gripping the said equipment item.

2. Device according to Claim 1, **characterised in that** the said at least one equipment item belongs to a group comprising a light source and an airport runway.

3. Device (1) according to any one of Claims 1 and 2, **characterised in that** the said light source (7) is an airport light or an airport signalling panel.

4. Device (1) according to any one of Claims 1 to 3, **characterised in that** it comprises a communication module (8) adapted to communicate with at least one remotely located control unit (9).

5. Device (1) according to any one of Claims 1 to 4, **characterised in that** it comprises a module (12) for detecting at least one object, comprising at least one photosensitive sensor and/or a scanning laser, and a unit for processing data collected by the said sensor and/or the said laser.

6. Device (1) according to Claim 5, **characterised in that** the said navigation module (14) comprises a unit for determining the said at least one trajectory as a function of the location of the said detected object.

7. Device (1) according to any one of Claims 5 and 6, **characterised in that** the said module (12) for detecting at least one object comprises means for identifying at least one airport light and/or signalling panel (7) among the said at least one detected object on the basis of at least one information item characteristic of the said airport light (7) and/or the said signalling panel.

8. Device (1) according to any one of claims 1 to 7, **characterised in that** the said at least one monitoring and/or maintenance module is a module (16) for photometric monitoring of a beam emitted by the said at least one light source (7), the said module comprising at least one photometric sensor (17) adapted to collect luminosity data from the said beam and a processing unit adapted to obtain photometric characteristics of the said beam on the basis of the said collected data.

9. Device (1) according to Claim 8, **characterised in that** the said photometric monitoring unit (16) forms a module (12) for detecting the said at least one object.

10. Device (1) according to any one of claims 1 to 9, **characterised in that** the said at least one photosensitive sensor is mounted on the said telescopic arm, and that the said arm (15) is adapted to raise and/or lower and/or pivot the said sensor.

11. Device (1) according to any one of claims 1 to 10, **characterised in that** the said articulated arm (15) comprises a submodule for cleaning the said equipment item.

12. Device (1) according to any one of claims 1 to 11, **characterised in that** the said at least one monitoring and/or maintenance module is a module for monitoring the slip of an airport runway, comprising at least one slip sensor.

13. System (11) for monitoring and/or maintenance of at least one equipment item of an airport zone, the said system (11) comprising:
• at least one device (1) according to any one of Claims 1 to 12,
• at least one module (9) for remote control of the said device (1).

14. Method for monitoring and/or maintenance at least one equipment item of an airport zone using a device (1) according to one of Claims 1 to 12, which is motorised without a crew, is adapted to move on an airport runway and comprises a module for monitoring its current location (x_{R},y_{R}), at least one memory (6) and a navigation module (14), the said method comprising at least:
• a step (E1) of moving the said device (1) along a trajectory determined by the said navigation module (14) of the device (1) towards or on the said at least one equipment item, which is defined as a function of the location (x_{R},y_{R}) of the said device (1) and the location (x_{F},y_{F}) of at least one light source (7),
• a step of using a module (E2) for monitoring and/or maintenance of the said at least one equipment item.
